# NEW EUROPEAN PATENT SPECIFICATION

(11) **EP 3 127 755 B2**
(45) Date of publication and mention of the opposition decision: **04.12.2024**
(45) Mention of the grant of the patent: 10.04.2019
(21) Application number: 16182788.6
(22) Date of filing: 04.08.2016
(51) Int. Cl.: B60R 21/013, B60R 21/017, B62J 27/00

(54) **IMPACT DETECTION DEVICE**
STOSSDETEKTIONSVORRICHTUNG
DISPOSITIF DE DÉTECTION D'IMPACT

(30) Priority: 07.08.2015 IT UB20152924
(43) Date of publication of application: 08.02.2017
(73) Proprietor: Dainese S.p.A., 36064 Colceresa (Vicenza) (IT)
(72) Inventor: Silani, Enrico, 21026 Gavirate (Varese) (IT)
(74) Representative: Manfrin, Marta

(56) References cited:
- EP-A2- 1 228 711
- EP-A2- 1 281 949
- WO-A1-01/81128
- WO-A1-2012/056422
- DE-B3- 102005 052 266
- DE-B3- 102005 052 266
- FR-A1- 2 680 146
- US-A1- 2002 003 584
- US-A1- 2005 067 816
- US-A1- 2013 038 045
- US-A1- 2014 111 339

## Description

The present invention relates generally to the sector of providing protection for a user by means of an airbag, so as to protect the user from impacts due to falling or sliding, when travelling on a means of transport, such as a vehicle or any other means of transport, such as a horse or other animal, sports equipment, such as a pair of skis or a bob, or similar means of transport. More particularly, the present disclosure relates to an impact detection device for detecting an impact and where necessary sending a signal in order to activate inflation of the airbag.

In the sector of user protection it is known to use protection devices including airbags which are inflated in the event of an impact. In particular, the airbags are activated depending on signals emitted by impact detection devices located on the means of transport on which the user is travelling.

Although convenient from many points of view, impact detection devices have proved to be not sufficiently practical for mounting on a means of transport, in particular a motorcycle. In fact, the author of the present disclosure has established that, at present, the impact detection devices located on a motorcycle require a lot of wiring both for connection to a power supply battery on-board the means of transport and for connecting the sensor to a control unit which may be present and also require two separate spaces for positioning the sensor and the control unit on the motorcycle.

WO01/81128 A1 discloses a device for individual protection, comprising an airbag.

One technical problem forming the basis of the present disclosure is therefore that of providing an impact detection device which allows the aforementioned drawbacks of the prior art to be overcome and/or to achieve further advantages.

This is obtained by means of an impact protection device and a method as defined in the respective independent claims. Secondary characteristic features forming the subject of the present disclosure are defined in the corresponding dependent claims.

Basically, in accordance with the present disclosure, an impact protection device which is a single body in form of a box or a closed casing, which may be recharged where necessary, is provided. With such a device it is possible to avoid the need for a direct and permanent power supply via the means of the transport, thus avoiding any additional wiring on the means of transport.

Basically, it consists of a device provided with an "open" and temporary interface, namely an interface which can be accessed and connected where necessary with an electric charging device.

Protection is also requested for a means of transport which includes the impact detection device. The device can be associated with a means of transport, in a permanent or also removable manner by means of simple, but strong removal mechanism. In the case where the device is a removable body there is the advantage that it may be recharged "conveniently" at home or may be removed in order to prevent theft thereof.

The impact detection device incorporates at least one impact sensor or transducer able to detect an impact signal. The impact detection device includes moreover, inside the closed casing, also a control unit or logic unit able to process the signal of the sensor and able to communicate, by means of a transmission module, with a control unit located on a person, namely associated with a user. It is pointed out moreover that the control unit or logic unit could be conceptually be regarded as forming part of the transmission module (communication interface) able to receive a signal from the sensor, for example a signal indicating that a threshold value has been exceeded, process it and manage the transmission thereof.

The impact detection device according to the present disclosure has the advantage of reducing and in fact eliminating entirely the need for further wiring for electric powering thereof and for connection to a processing control unit, since the sensor may not be permanently connected either to the battery of the two-wheeled vehicle or to the additional control unit on the two-wheeled vehicle. Basically, the impact detection device is without any permanent wired electrical connection to another device.

In other words, powering may be performed only occasionally and temporarily where required.

More particularly, the device in question consists of an impact detection device in the form of a single block or box which incorporates a sensor for detecting an impact of the motorcycle (accelerometer or the like) and a processing unit (microprocessor) which acquires and processes the signals on the basis of which it decides to transmit an activation signal to the control unit located on a person, preferably by means of a radio interface, and a battery.

The special feature of the system is that the single block or box is a single part which may be non-detachable from the motorcycle (if for example mounted on the fork by means of clamps) or removable from the motorcycle (if for example mounted inside a rubber cover).

The impact detection device may be electrically charged externally by moving, close to the casing, a device for providing a power supply, wirelessly (by induction).

A wireless electric power supply has the advantage that the impact detection device does not have sockets or openings for connectors. It is possible therefore to provide a watertight casing which is essentially unable to be accessed by a user and is also resistant to atmospheric agents.

The control unit on the person may also communicate with external devices (for example a smartphone) via Bluetooth. By means of these external devices it is possible to check also the information relating to the state of the impact detection device. In other words, in some embodiments of the present disclosure, the device is configured to communicate with the control unit located on a person and, via said unit, to be connected, for example via Bluetooth, to an external device. Alternatively, in other embodiments, the device includes internally a Bluetooth interface by means of which it is able to communicate with external devices.

What is important is that the impact detection device should be able to be charged externally, by moving the impact detection device close to an electric charging device, preferably of the wireless type, for example of the type performing charging by means of induction. Protection is also requested for a combination of the impact detection device according to the present disclosure and an electric charging device or battery charger, in which preferably the two devices are devices which are structurally independent and can be connected together if necessary.

The electric charging device is preferably a device which is structurally independent of the means of transport, namely a device which may be occasionally or temporarily moved close to the means of transport, and more particularly the impact detection device, if necessary when required.

Further characteristic features and modes of use forming the subject of the present disclosure will become clear from the following detailed description of a number of preferred exemplary and non-limiting embodiments thereof.

It should also be understood that the scope of the present disclosure includes all the possible combinations of embodiments and characteristics described with reference to the following detailed description.

Reference will be made to the figures of the accompanying drawings in which:

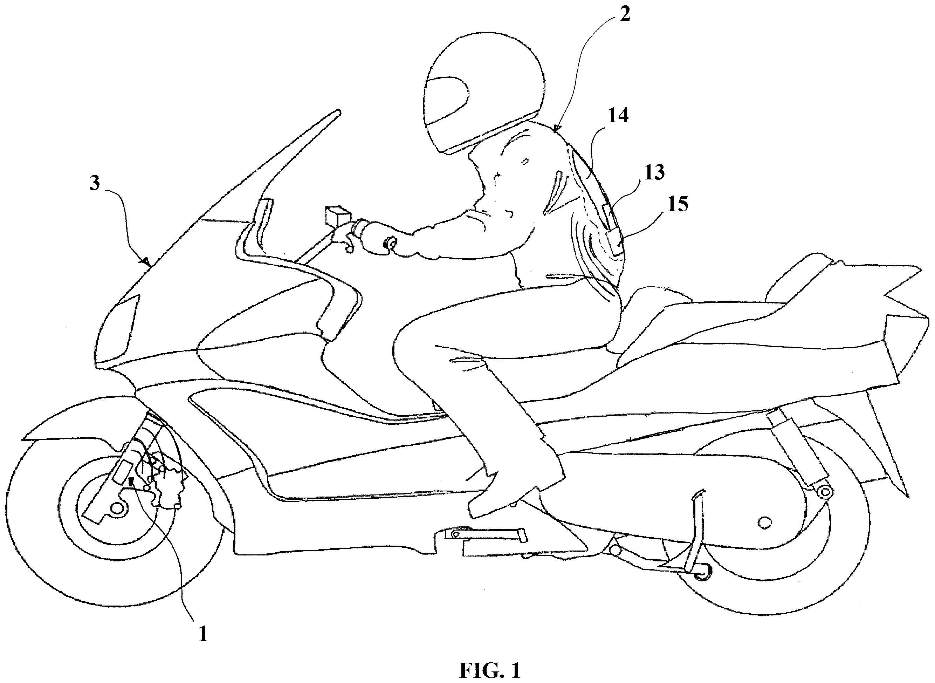

- Figure 1 shows a schematic view of a motorcycle provided with an impact protection device according to an embodiment of the present disclosure;

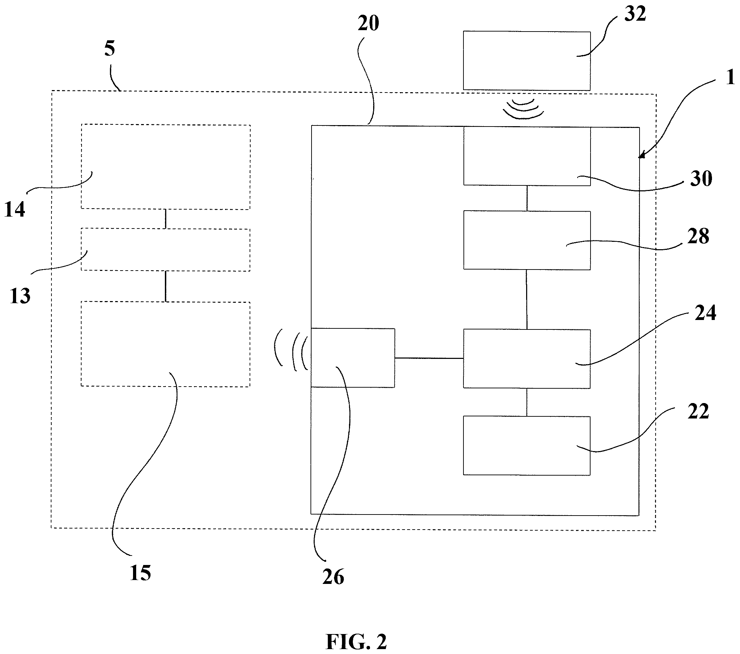

- Figure 2 shows a block diagram of a protection device including an impact protection device according to an embodiment of the present disclosure.

With reference to the attached figures, the reference number 1 denotes an impact detection device according to the present disclosure, designed to be positioned on a means of transport 3. The means of transport 3 may be, for example, a motorcycle, a horse, a pair of skis or a bicycle. In the embodiment shown in the Figures an impact detection device 1 is mounted on the fork of a motorcycle.

The impact detection device 1 according to the present disclosure is able to detect a condition of the means of transport such as a speed, quantity of movement, acceleration, kinetic energy, an inclination, a variation in pressure or information associated with an impact or danger situation affecting a user, such as an optical signal, or a combination of such information.

In particular, the impact detection device 1 forms part of a protection device 5 which includes, in addition to the impact detection device 1, an inflation device 13 and an airbag 14. The inflation device 13 and said airbag 14, while being parts of particular importance for effective operation of said protection device 5, will not be further described in greater detail, since they are parts which are already known per se and within the competence of a person skilled in art, said parts being described for example in patent application WO 2010-067288 A1 in the name of the present Applicant.

The inflation device 13 is in turn associated with a control unit 15 located on the person, namely associated with a user 2, for example being situated inside a garment or contained in a pocket of the garment worn by the user 2.

Basically, the control unit 15 manages a signal received from the impact detection device 1 and sends an inflation signal. The user 2 is, for example the driver or the rider of the means of transport 3.

The impact detection device 1 is, as mentioned, mounted or may be mounted on a vehicle 3, preferably on the fork of a two-wheeled vehicle, or in another location which allows accurate detection of the impact. In a vehicle other than a two-wheeled vehicle, such as a pair of skis, a horse or other means of transport, the impact detection device 1 may be arranged in a front zone of the means of transport. It is understood that the choice of the location of the impact detection device 1 is within the competence of a person skilled in the art.

In one embodiment, the impact detection device 1 is a part non-detachable from the vehicle, for example in the case where the impact detection device 1 is mounted on the fork by means of clamps.

In an alternative embodiment, the impact detection device 1 is a device removable from the means of transport 3, for example in the case where the impact detection device 1 is mounted inside a rubber cover detachable from the fork or from the location where the rubber cover may be fixed to the means of transport 3.

In particular, according to one aspect of the present disclosure, the impact detection device 1 includes a single body, for example in the form of a box or a closed casing 20.

The impact detection device 1 includes, in the closed casing 20 and incorporated inside it, a sensor 22 for detection of an impact of the motorcycle, such as an accelerometer or the like, a processing unit 24, such as a microprocessor, a communication interface 26, for example a radio interface, and a rechargeable battery 28.

The processing unit 24 acquires and processes the signals, on the basis of which it decides to transmit an activation signal to the control unit 15 located on the person by means of the communication interface 26.

Moreover, the impact detection device 1 includes an electric power supply interface 30 for allowing external electrical power supply device 32 to charge the rechargeable battery of the impact detection device 1.

Basically, according to the present disclosure, the impact detection device 1 is a single part non-detachable from the means of transport 3 (if, as mentioned, it is mounted for example on the fork by means of clamps) or removable from the means of transport 3 (if, as mentioned, for example it is mounted inside a rubber cover) and chargeable electrically externally, in an occasional and temporary manner, by moving close to the casing a device for providing a power supply, wirelessly (by induction). This latter device may be instrument which is independent of the motorcycle and may be connected, also on its own, occasionally or temporarily to the impact detection device 1 as required.

A wireless interface has the advantage of allowing the use of a watertight casing which is substantially inaccessible to a user and also resistant to atmospheric agents.

From a functional point of view, the processing unit 24 is connected to the sensor 22 and configured to emit a signal indicating a danger condition to the control unit 15 located on a person, namely associated with the user 2. The control unit 15 is configured to integrate any other signals which arrive from other sensors, such as sensors located on a person, and is turn connected to the inflation device 13 so as to send a signal for activating the air bag 14 when a danger situation is detected.

In connection with the transmission of signals from the processing unit 24 to the control unit 15, a person skilled in the art may understand that transmission occurs wirelessly.

The condition detected by the impact detection device 1 may be, as mentioned, a condition relating to a speed value, quantity of movement, acceleration, kinetic energy, an inclination, a variation in pressure or similar information which may be associated with an impact or with a danger situation affecting a user.

A corresponding threshold value, namely a minimum value of a parameter, may be associated with the sensor such as to allow the processing unit 24 to interpret a danger signal only when real danger conditions exist, or a fall occurs, and trigger sending, by the impact detection device 1, of an activation signal.

According to other aspects of the present disclosure, several sensors associated with the user 2 and/or with the means of transport 3 may be provided and the sensors may be able to detect simultaneously several operating conditions of the user 2 and/or of the means of transport 3.

It is also to be understood that, on the basis of the type of sensor, parameter to be measured, the type of means of transport 3 and the type of activity which is performed by the user 2 as well as the degree of protection required, the impact detection device 1 may be modified or adapted depending on needs. An important feature consists in the fact that the impact detection device 1 is an independent device which is provided with an interface for electrically powering externally the means of transport and preferably does not have fixed and permanent wires for connection to an electrical power supply of the transport means.

It is to be understood that a person skilled in the art is able to choose sensors and control units which are most suited and use them as required and configure them according to the modes of operation described above.

The subject-matter of the present disclosure has been described hitherto with reference to preferred embodiments. It is to be understood that other embodiments relating to the same inventive idea may exist, all of these falling within the scope of protection of the claims which are attached below.

## Claims

1. Impact detection device (1) for detecting an impact condition or dangerous condition for a user (2) of a means of transport, such as a vehicle, a two-wheeled vehicle or any other means of transport, such as a horse or other animal, sports equipment, such as a pair of skis or a bob, or similar means of transport (3), wherein the impact detection device (1) is configured to avoid a direct and permanent power supply via the means of transport and wherein the impact detection device (1) includes a closed body in the form of a casing (20) or box and includes, within the casing,
a sensor (22),
a processing or logic unit (24) configured to acquire and process a signal from the sensor (22) and transmit an activation signal to an inflation device (13) for an airbag (14),
at least one communication interface or transmission module (26) configured to send the activation signal to the inflation device (13),
an electrical energy accumulation unit or an electrical charge accumulator or rechargeable battery (28) for powering the impact detection device, and
a wireless electric charging interface (30) able to be associated occasionally or temporarily with a respective interface of a wireless electric charging device (32) for allowing electrical powering of the electrical energy accumulation unit (28).

2. Impact detection device (1) according to claim 1, wherein the impact detection device (1) is configured as a single block-like part and/or a structurally independent block-like part, non-detachable from the means of transport (3).

3. Impact detection device (1) according to claim 1, wherein the impact detection device (1) is configured as a single block-like part and/or a structurally independent block-like part detachable from the means of transport (3).

4. Impact detection device (1) according to any one of the preceding claims, wherein the communication interface (26) is a radio interface.

5. Impact detection device (1) according to any one of the preceding claims, wherein the impact detection device (1) is not connected by fixed and/or permanent electrical wiring to any device of the means of transport (3) and/or wherein said impact detection device (1) is without a permanent wired electrical connection to any other device.

6. Impact detection device (1) according to any one of the preceding claims, wherein the electric charging interface (30) is a wireless interface for electrical powering by means of induction.

7. Impact detection device (1) according to any one of the preceding claims, wherein the impact detection device (1) is a watertight casing.

8. Combination of a wireless electric power supply unit or battery charger and an impact detection device according to any one of claims 1 to 7.

9. Means of transport (3) comprising or in combination with an impact detection device (1) according to any one of claims 1 to 7.

10. Means of transport (3) according to claim 9, not including the inflation device (13) for an airbag (14).

11. Protection device (5) comprising an impact detection device (1) according to any one of the preceding claims 1 to 7, an inflation device (13) and at least one airbag (14), wherein the inflation device (13) is associated with a control unit (15) associated with a user (12) and configured to control an activation signal from the impact detection device (1) and wherein the impact detection device (1) is a separate device structurally independent of said inflation device (13) for an airbag (14).

12. Method for powering an impact detection device (1) for detecting an impact condition or dangerous condition for a user who is located on a means of transport, such as a vehicle, a two-wheeled vehicle, or any other means of transport, such as a horse or other animal, sports equipment, such as a pair of skis or a bob, or similar means of transport, wherein the impact detection device (1) is a body in the form of a casing or box (20) associated with and/or fixed to the means of transport (3) and includes, in the casing or box body, at least one sensor (22) for detecting the impact or danger condition for the user (2) and a processing or logic unit (24) configured to acquire and process a signal from the sensor (22),
wherein the method involves electrically powering the impact detection device (1) by means of a wireless electric charging device (32) and without a direct and permanent power supply via the means of transport, wherein the electric charging device (32) is moved close to, or occasionally or temporarily connected with, the impact detection device to allow wireless electrical powering of an electrical energy accumulation unit or electric charge accumulator or rechargeable battery (28), the impact detection device (1) including a wireless interface (30) for temporary or occasional electrical powering.

13. Method according to claim 12, wherein the impact detection device (1) is charged by means of induction.

14. Method according to claims 12 or 13, wherein the electric charging device (32) is a device which is structurally independent of the means of transport (3) and the impact detection device is powered electrically by means of the wireless electric charging device (32) only occasionally or temporarily.

## Patentansprüche

1. Aufprallerfassungsvorrichtung (1) zum Erfassen eines Aufprallzustands oder eines gefährlichen Zustands für einen Benutzer (2) eines Transportmittels, wie eines Fahrzeugs, eines zweirädrigen Fahrzeugs oder eines beliebigen anderen Transportmittels, wie eines Pferds oder anderen Tieres, einer Sportausrüstung, wie eines Skipaares odereines Bobs, oder ähnlicher Transportmittel (3), wobei die Aufprallerfassungsvorrichtung (1) ausgebildet ist, um eine direkte und andauernde Stromversorgung durch das Transportmittel zu vermeiden und wobei die Aufprallerfassungsvorrichtung (1) einen geschlossenen Körper in Form eines Gehäuses (20) umfasst, oder einer Box, und innerhalb des Gehäuses umfasst :
einen Sensor (22),
eine Verarbeitungs- oder Logikeinheit (24), die ausgebildet ist, um ein Signal von dem Sensor (22) zu erfassen und zu verarbeiten und ein Aktivierungssignal an eine Aufblasvorrichtung (13) für einen Airbag (14) zu senden,
mindestens eine Kommunikationsschnittstelle oder ein Übertragungsmodul (26), die ausgebildet ist zum Senden des Aktivierungssignals an die Aufblasvorrichtung (13),
eine elektrische Energiespeichereinheit oder einen elektrischen Ladungsakkumulator oder eine wiederaufladbare Batterie (28), um die Aufprallerfassungsvorrichtung mit Strom zu versorgen, und
eine elektrische Ladeschnittstelle (30), die gelegentlich oder vorübergehend einer jeweiligen Schnittstelle einer elektrischen Ladevorrichtung (32) zugeordnet werden kann, um eine elektrische Stromversorgung der elektrischen Energiespeichereinheit (28) zu ermöglichen.

2. Aufprallerfassungsvorrichtung (1) gemäß Anspruch 1, wobei die Aufprallerfassungsvorrichtung (1) als ein einzelnes blockartiges Teil und / oder ein baulich unabhängiges blockartiges Teil ausgebildet ist, das von dem Transportmittel (3) nicht lösbar ist.

3. Aufprallerfassungsvorrichtung (1) gemäß Anspruch 1, wobei die Aufprallerfassungsvorrichtung (1) als ein als ein einzelnes blockartiges Teil und / oder ein baulich unabhängiges blockartiges Teil ausgebildet ist, das von dem Transportmittel (3) lösbar bzw. abnehmbar ist.

4. Aufprallerfassungsvorrichtung (1) gemäß einem der vorhergehenden Ansprüche, wobei die Kommunikationsschnittstelle (26) eine Funkschnittstelle ist.

5. Aufprallerfassungsvorrichtung (1) gemäß einem der vorhergehenden Ansprüche, wobei die Aufprallerfassungsvorrichtung (1) nicht durch ortsfeste und / oder dauerhafte elektrische Verdrahtung mit einer beliebigen Vorrichtung des Transportmittels (3) verbunden ist und / oder wobei die Aufprallerfassungsvorrichtung (1) keine fest verdrahtete elektrische Verbindung zu irgendeiner anderen Vorrichtung aufweist.

6. Aufprallerfassungsvorrichtung (1) gemäß einem der vorangehenden Ansprüche, wobei die elektrische Ladeschnittstelle (30) eine drahtlose Schnittstelle zur elektrischen Stromversorgung mittels Induktion ist.

7. Aufprallerfassungsvorrichtung (1) gemäß einem der vorhergehenden Ansprüche, wobei die Aufprallerfassungsvorrichtung (1) ein wasserdichtes Gehäuse ist.

8. Kombination einer drahtlosen Stromversorgungseinheit oder eines drahtlosen Batterieladegerätes und einer Aufprallerfassungseinrichtung gemäß einem der Ansprüche 1 bis 7.

9. Transportmittel (3) umfassend eine oder in Kombination mit einer Aufprallerfassungsvorrichtung (1) gemäß einem der Ansprüche 1 bis 7.

10. Transportmittel (3) nach Anspruch 9, das die Aufblasvorrichtung (13) für einen Airbag (14) nicht enthält.

11. Schutzvorrichtung (5), umfassend eine Aufprallerfassungsvorrichtung (1) gemäß einem der vorhergehenden Ansprüche 1 bis 7, eine Aufblasvorrichtung (13) und mindestens einen Airbag (14), wobei die Aufblasvorrichtung (13) verbunden ist mit einer Steuereinheit (15), die einem Benutzer (12) zugeordnet ist und ausgebildet ist, um ein Aktivierungssignal von der Aufprallerfassungsvorrichtung (1) zu kontrollieren, und wobei die Aufprallerfassungsvorrichtung (1) eine separate Vorrichtung ist, die strukturell unabhängig von der Aufblasvorrichtung (13) für einen Airbag (14) ist.

12. Verfahren zur Energieversorgung einer Aufprallerfassungsvorrichtung (1) zum Erfassen eines Aufprallzustands oder eines gefährlichen Zustands für einen Benutzer, der sich auf einem Transportmittel befindet, wie einem Fahrzeug, einem zweirädrigen Fahrzeug, oder einem anderen Transportmittel, wie einem Pferd oder anderen Tier, einer Sportausrüstung, wie einem Paar Ski oder einem Bob, oder ähnlichen Transportmitteln, wobei die Aufprallerfassungsvorrichtung (1) eine Karosserie in Form eines Gehäuses oder einer Box ist (20), das mit dem Transportmittel (3) verbunden ist und / oder an diesem befestigt ist, und in dem Gehäuse oder dem Kastenkörper mindestens einschließt: einen Sensor (22) zum Erfassen des Aufprall- oder Gefahrenzustands für den Benutzer (2) und eine Verarbeitung- oder Logikeinheit (24), die ausgebildet ist, um ein Signal von dem Sensor (22) zu erfassen und zu verarbeiten,
wobei das Verfahren die elektrische Stromversorgung der Aufprallerfassungsvorrichtung (1) mittels einer drahtlosen elektrischen Ladevorrichtung (32) umfasst, ohne eine direkte und permanente Energieversorgung durch das Transportmittel, wobei die elektrische Ladevorrichtung ( 32) nahe an die Aufprallerfassungsvorrichtung bewegt wird oder gelegentlich oder zeitweilig damit verbunden ist, um die elektrische Energieversorgung eines elektrischen Energiespeichers oder eines elektrischen Ladungsakkumulators oder einer aufladbaren Batterie (28) zu ermöglichen, wobei die Aufprallerfassungsvorrichtung (1) eine Schnittstelle ( 30) für zeitweilige oder gelegentliche elektrische Stromversorgung einschließt.

13. Verfahren gemäß Anspruch 12, wobei die Aufprallerfassungsvorrichtung (1) mittels Induktion aufgeladen wird.

14. Verfahren gemäß Anspruch 12 oder 13, bei dem die elektrische Ladevorrichtung (32) eine Vorrichtung ist, die von dem Transportmittel (3) baulich unabhängig ist und die Aufprallerfassungsvorrichtung durch die elektrische Ladevorrichtung (32) nur gelegentlich oder vorübergehend mit Strom versorgt wird.

## Revendications

1. Dispositif de détection d'impact (1) pour détecter une condition d'impact ou une condition dangereuse pour un utilisateur (2) d'un moyen de transport, tel qu'un véhicule, un véhicule à deux roues ou de n'importe quel autre moyen de transport, tel qu'un cheval ou un autre animal, d'un équipement de sports, tel qu'une paire de skis ou un bobsleigh, ou de moyens de transport (3) similaires, dans lequel le dispositif de détection d'impact (1) est configuré pour éviter une alimentation directe et permanente par l'intermédiaire du moyen de transport et dans lequel le dispositif de détection d'impact (1) comprend un corps fermé sous la forme d'un carter (20) ou d'une boîte et comprend, dans le carter,
un capteur (22),
une unité de traitement ou logique (24) configurée pour acquérir et traiter un signal provenant du capteur (22) et transmettre un signal d'activation à un dispositif de gonflage (13) pour un coussin de sécurité gonflable (14),
au moins une interface de communication ou un module de transmission (26) configuré pour envoyer le signal d'activation au dispositif de gonflage (13),
une unité d'accumulation d'énergie électrique ou un accumulateur de charge électrique ou une batterie rechargeable (28) pour alimenter le dispositif de détection d'impact, et
une interface de charge électrique sans fil (30) pouvant être associée occasionnellement ou temporairement à une interface respective d'un dispositif de charge électrique sans fil (32) pour permettre l'alimentation électrique de l'unité d'accumulation d'énergie électrique (28).

2. Dispositif de détection d'impact (1) selon la revendication 1, dans lequel le dispositif de détection d'impact (1) est configuré en tant que partie similaire à un bloc unique et/ou partie similaire à un bloc structurellement indépendante, non détachables du moyen de transport (3).

3. Dispositif de détection d'impact (1) selon la revendication 1, dans lequel le dispositif de détection d'impact (1) est configuré en tant que partie similaire à un bloc unique et/ou partie similaire à un bloc structurellement indépendante détachables du moyen de transport (3).

4. Dispositif de détection d'impact (1) selon l'une quelconque des revendications précédentes, dans lequel l'interface de communication (26) est une interface radio.

5. Dispositif de détection d'impact (1) selon l'une quelconque des revendications précédentes, dans lequel le dispositif de détection d'impact (1) n'est pas connecté par un câblage électrique fixe et/ou permanent à un quelconque dispositif du moyen de transport (3) et/ou dans lequel ledit dispositif de détection d'impact (1) est sans connexion électrique câblée permanente à un quelconque autre dispositif.

6. Dispositif de détection d'impact (1) selon l'une quelconque des revendications précédentes, dans lequel l'interface de charge électrique (30) est une interface sans fil pour une alimentation électrique par induction.

7. Dispositif de détection d'impact (1) selon l'une quelconque des revendications précédentes, dans lequel le dispositif de détection d'impact (1) est un carter étanche à l'eau.

8. Combinaison d'une unité d'alimentation électrique sans fil ou d'un chargeur de batterie et d'un dispositif de détection d'impact selon l'une quelconque des revendications 1 à 7.

9. Moyen de transport (3) comprenant ou combiné à un dispositif de détection d'impact (1) selon l'une quelconque des revendications 1 à 7.

10. Moyen de transport (3) selon la revendication 9, ne comprenant pas le dispositif de gonflage (13) pour un coussin de sécurité gonflable (14).

11. Dispositif de protection (5) comprenant un dispositif de détection d'impact (1) selon l'une quelconque des revendications 1 à 7 précédentes, un dispositif de gonflage (13) et au moins un coussin de sécurité gonflable (14), dans lequel le dispositif de gonflage (13) est associé à une unité de commande (15) associée à un utilisateur (12) et configurée pour commander un signal d'activation provenant du dispositif de détection d'impact (1) et dans lequel le dispositif de détection d'impact (1) est un dispositif séparé structurellement indépendant dudit dispositif de gonflage (13) pour un coussin de sécurité gonflable (14).

12. Procédé pour alimenter un dispositif de détection d'impact (1) pour détecter une condition d'impact ou une condition dangereuse pour un utilisateur qui est situé sur un moyen de transport, tel qu'un véhicule, un véhicule à deux roues, ou n'importe quel autre moyen de transport, tel qu'un cheval ou un autre animal, un équipement de sports, tel qu'une paire de skis ou un bobsleigh, ou des moyens de transport similaires, dans lequel le dispositif de détection d'impact (1) est un corps sous la forme d'un carter ou d'une boîte (20) associé et/ou fixée au moyen de transport (3) et comprend, dans le corps de carter ou de boîte, au moins un capteur (22) pour détecter la condition d'impact ou de danger pour l'utilisateur (2) et une unité de traitement ou logique (24) configurée pour acquérir et traiter un signal provenant du capteur (22),
dans lequel le procédé implique l'alimentation électrique du dispositif de détection d'impact (1) au moyen d'un dispositif de charge électrique sans fil (32) et sans alimentation directe et permanente par l'intermédiaire du moyen de transport, dans lequel le dispositif de charge électrique (32) est déplacé à proximité du, ou occasionnellement ou temporairement connecté au dispositif de détection d'impact pour permettre l'alimentation électrique sans fil d'une unité d'accumulation d'énergie électrique ou d'un accumulateur de charge électrique ou d'une batterie rechargeable (28), le dispositif de détection d'impact (1) comprenant une interface sans fil (30) pour une alimentation électrique temporaire ou occasionnelle.

13. Procédé selon la revendication 12, dans lequel le dispositif de détection d'impact (1) est chargé par induction.

14. Procédé selon la revendication 12 ou 13, dans lequel le dispositif de charge électrique (32) est un dispositif qui est structurellement indépendant du moyen de transport (3) et le dispositif de détection d'impact est alimenté électriquement au moyen du dispositif de charge électrique sans fil (32) seulement occasionnellement ou temporairement.
